(19) **Europäisches Patentamt**

**European Patent Office**

**Office européen des brevets**

(11) **EP 0 718 826 B1**

(12) **FASCICULE DE BREVET EUROPEEN**

(45) Date de publication et mention
de la délivrance du brevet:
**30.08.2000 Bulletin 2000/35**

(51) Int Cl.⁷: **G11B 5/49**, G11B 11/10

(21) Numéro de dépôt: **95402868.4**

(22) Date de dépôt: **19.12.1995**

(54) **Dispositif et système de lecture**

Lesevorrichtung und -system

Read device and system

(84) Etats contractants désignés:
**DE GB IT NL**

(30) Priorité: **23.12.1994 FR 9415583**

(43) Date de publication de la demande:
**26.06.1996 Bulletin 1996/26**

(73) Titulaire: **THOMSON-CSF**
**75008 Paris (FR)**

(72) Inventeur: **Audoin, Michel, Thomson-CSF**
**F-92402 Courbevoie Cedex (FR)**

(74) Mandataire: **Benoit, Monique**
**Thomson-CSF-S.C.P.I.,**
**13, Avenue du Président Salvador Allende**
**94117 Arcueil Cedex (FR)**

(56) Documents cités:
**EP-A- 0 540 385**   **EP-A- 0 714 091**
**WO-A-94/15335**   **FR-A- 2 569 072**

- **PATENT ABSTRACTS OF JAPAN vol. 011 no. 153 (P-577) ,19 Mai 1987 & JP-A-61 287056 (TOSHIBA CORP) 17 Décembre 1986**
- **JAPANESE JOURNAL OF APPLIED PHYSICS, PART 1 (REGULAR PAPERS & SHORT NOTES), FEB. 1992, JAPAN, vol. 31, no. 2B, ISSN 0021-4922, pages 630-634, KATAYAMA R ET AL 'Multi-beam optical disk drive for high data transfer rate systems'**

## Description

L'invention concerne un dispositif et un système de lecture.

L'invention s'applique notamment à la lecture d'enregistrements magnétiques ou optiques et, dans ce cadre, à la lecture d'enregistrement dans les systèmes d'enregistrements tels que les périphériques informatiques et tous systèmes professionnels.

Elle peut être étendue aux enregistrements sur bande optique et sur disque magnétique ou optique, dès lors que l'on veut y lire plusieurs informations adjacentes en parallèle.

L'enregistrement haute densité d'information sur un support d'enregistrement pose un problème de perturbations (ou diaphonies) lorsque les informations sont très proches les unes des autres. Une correction de diaphonie est alors nécessaire pour optimiser les performances du système.

La Demande de Brevet français n° 92 15474 (publiée sous le numéro FR-A-2 699 724: voir aussi WO-A-9 415 335 de la même famille de brevets) décrit une correction de diaphonie dans un système de lecture d'enregistrements multi-pistes. L'enregistrement haute densité sur des pistes parallèles pose un double problème à la relecture de suivi et de séparation des pistes. La faible largeur des pistes (inférieure à 20µm) fait qu'il est difficile sur un lecteur à bande d'assurer la précision du suivi de piste sur la base du seul guidage mécanique du bord de bande. La nécessité de garantir l'intéropérabilité des bandes et des lecteurs vient aggraver cette difficulté.

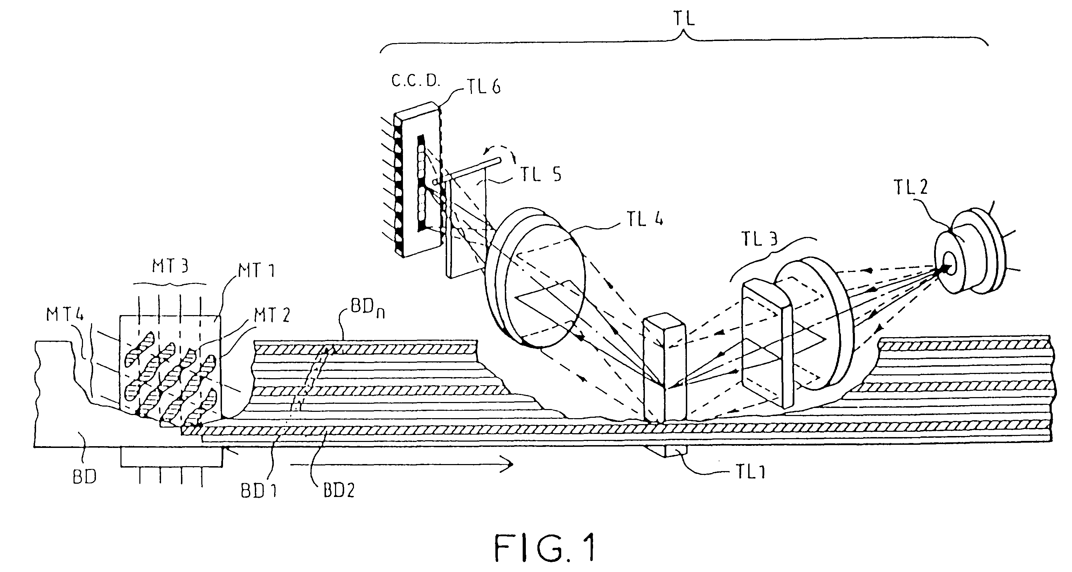

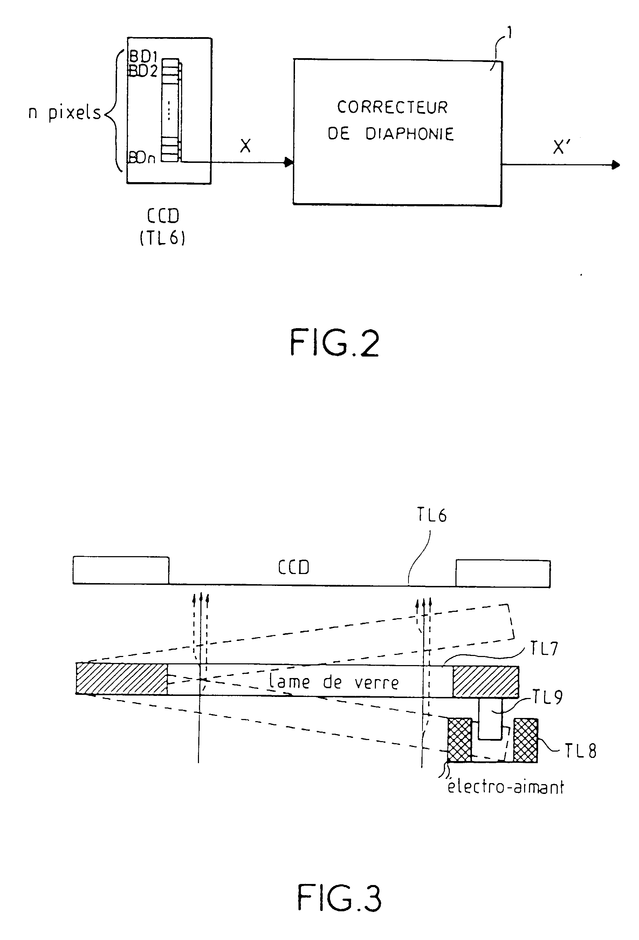

En se reportant à la figure 1, on voit que dans un tel système plusieurs pistes BD1-BDn sont relues simultanément grâce à un système magnéto-optique TL utilisant un capteur CCD linéaire TL6. Les diaphonies issues des premières pistes voisines de chaque piste sont calculées en temps réel. La figure 2 montre que les informations sur les pistes BD1-BDn sont lues par le CCD TL6 et reçues par un correcteur de diaphonie 1. Comme le train d'échantillons série X correspond à des pistes consécutives BD1-BDn, il est ordonné suivant la séquence 1, 2, ..., N-1, N, 1, 2, ... dans le cas où N pistes sont analysées. Le correcteur corrige les diaphonies en temps réel en tenant compte des coefficients précédemment calculés, et des valeurs, connues des voisins perturbateurs et transmet un train d'échantillons corrigés X'. Ce système permet donc d'annuler les diaphonies issues des premiers voisins.

Pourtant, dans ce système le capteur CCD linéaire fixe, par ses caractéristiques de transfert optique-électronique, les performances électriques globales et notamment le débit du dispositif. Pour obtenir des débits d'informations plus élevés, il faut augmenter la cadence de balayage du CCD.

Le but de l'invention est d'accroître le débit du système et donc d'augmenter la vitesse de traitement.

La demande de Brevet français n° 94 14147 (publiée sous le numéro FR-A-2 727 589 après la date de priorité de la présente demande; la demande EP-A-0 714 091 de la même famille de brevets est cependant un état antérieur de la technique selon l'article 54(3) CBE) décrit un système de correction de diaphonie dans un système de lecture qui utilise des capteurs CCD rapides commerciaux qui offrent des sorties différenciées pour les photodétecteurs de rang pair et impair. Afin de doubler la cadence échantillon, les pixels sont classés en deux groupes suivant la parité de leur rang. On obtient alors, en sortie d'un CCD de N pixels, deux trames simultanées constituées de N/2 échantillons correspondant aux N/2 photodiodes de chaque groupe. Pourtant ce type ce capteur CCD ne permet pas la lecture d'un très grande nombre de pistes à haut débit.

La présente invention utilise de préférence des capteurs CCD dont la ligne de capteurs est fractionnée et qui présente donc plusieurs sorties intermédiaires pour soutenir des débits élevés. A chaque sortie est associé un groupe de N photodétecteurs qui fournissent chacun une information (ou échantillon), image de leur piste respective à un rythme fixe. On obtient alors en sortie du CCD plusieurs trains de sous-trames simultanées constituées de N échantillons correspondant aux N photodiodes de chaque groupe, donc à N pistes adjacentes. Les informations provenant de l'ensemble des trains pendant une sous-trame constituent une trame. La durée d'une sous-trame vaut, en fait, M cycles d'horloge car il faut ajouter des cycles "morts", au nombre M-N, inactifs du point de vue d'information utile, mais nécessaires pour achever l'évacuation des charges accumulées par les photodiodes vers l'extérieur du composant.

Le principe de base de la correction de diaphonie dans la demande de Brevet français n° 92 15474 s'applique pour un seul train d'échantillons série correspondants à des pistes consécutives et donc ordonnés suivant la séquence 1, 2, ..., N-1, N, 1, 2, ... dans le cas où N pistes sont analysées. On rencontre donc un autre problème qui est de réaliser la correction de diaphonie pour des trains multiples de signaux provenant de différents groupes de photodiodes.

Pour cela l'invention utilise un circuit de correction de diaphonie pour chaque train. Chaque circuit est essentiellement le même que celui déjà utilisé dans le système d'une seule trame tel que celui décrit dans la demande de Brevet français n° 92 15474. Chaque circuit de correction a besoin de trois échantillons successifs, dans le cas où la diaphonie est limitée aux premiers voisins, correspondant à une piste centrale et à ses deux voisines droite et gauche. Cependant, pour les échantillons situés en bout de chaque sous-trame, un des échantillons voisins appartient à une sous-trame différente. Bien que l'on puisse simplement ne pas corriger en diaphonie les échantillons extrêmes ou leur assigner des informations moins importantes telles qu'un signal de référence, ceci entraîne une réduction importante du débit en cas de courts "fragments" CCD (par exemple 2/16 en cas du capteur CCD à 16 pixels). L'invention corrige cependant tous les échantillons d'un CCD multi-sorties et nécessite un séquencement particulier pour traiter les premiers et derniers échantillons de chaque sous-trame.

De préférence, ce séquencement exploite les cycles "morts" présents dans une trame CCD.

L'invention concerne donc un dispositif de lecture tel que défini à la revendication 1.

Les différents objets et caractéristiques de l'invention apparaîtront plus clairement dans la description qui va suivre et dans les figures annexées qui représentent :

- la figure 1, un système d'enregistrement-lecture de bande magnétique dans lequel la lecture se fait avec un système magnétooptique ;
- la figure 2, un correcteur de diaphonie dans le système de l'art antérieur ;
- la figure 3, un système de suivi de piste ;
- la figure 4, un exemple de l'organisation des informations et des pistes sur une bande magnétique ;
- les figures 5a à 5e, un exemple de réalisation du circuit de l'invention ;
- la figure 6, un exemple de l'organisation des informations à la sortie du capteur CCD fractionné ;
- la figure 7, le séquencement des données et des calculs dans le séquenceur d'entrée ;
- la figure 8, le séquencement des données et des calculs dans le séquenceur de sortie ;
- les figures 9a à 9c, une variante de réalisation du circuit de correction ;
- les figures 10a et 10b, une variante pour une utilisation avec des sorties non multiplexées.

En se reportant à la figure 1, on va tout d'abord décrire un système d'enregistrement et de lecture auquel est applicable l'invention.

Ce système comporte un support d'enregistrement tel qu'une bande magnétique BD. Une tête d'enregistrement matricielle MT1 comporte une matrice de têtes élémentaires MT1 commandée par des conducteurs de sélection de lignes MT3 et des conducteurs de sélection de données MT4. Cette tête permet d'enregistrer sur la bande BD différentes pistes d'informations BD1, BD2, ... BDn correspondant chacune à une tête élémentaire de la tête matricielle MT1. Cette tête d'enregistrement est telle par exemple que celle de la Demande de Brevet français n° 88 05592 (publiée sous le numéro FR-A-2 630 853).

Sur la partie droite de la figure, on a représenté une tête de lecture magnétooptique TL telle que celle de la Demande de Brevet français n° 89 17313 (publiée sous le numéro FR-A-2 656 723).

Cette tête TL comporte un transducteur magnétooptique TL1 (à effet Kerr par exemple) disposé parallèlement au plan de la bande magnétique et dont la grande longueur est transverse à la longueur de la bande. Une source lumineuse TL2 éclaire, par un faisceau de lumière polarisée et à travers un système de focalisation TL3, le transducteur TL1 de telle façon que le faisceau lumineux soit focalisé sensiblement selon une ligne sur une face du transducteur TL1 à proximité de la bande magnétique BD. Le faisceau réfléchi par le transducteur TL1 voit sa polarisation modifiée en fonction du champ magnétique sur la bande. Le faisceau réfléchi est transmis par un système de focalisation TL4 et un système de suivi de piste TL5 à un détecteur optoélectronique TL6 comportant par exemple un dispositif à transfert de charge CCD.

Le détecteur TL6 comporte au moins autant d'éléments détecteurs qu'il y a de pistes sur la bande.

Le transducteur TL1 réfléchit vers le détecteur TL6 un faisceau constitué en réalité d'un ensemble de faisceaux de lecture de pistes chacun ayant eu sa polarisation influencée par une piste de la bande magnétique. L'ensemble de ces faisceaux de lecture est regu par le détecteur TL6 qui permet ainsi de détecter les informations lues sur chaque piste de la bande BD.

Le transducteur magnétooptique n'est pas gravé et offre une structure de lecture continue, ce qui peut contribuer à la diaphonie de lecture. Il reste fixe et c'est le système de suivi de piste TL5 qui permet, en défléchissant le faisceau, d'assurer le suivi de piste dynamique.

On pourrait aussi envisager un déplacement mécanique direct du CCD le long de son axe.

Le système optique peut être conçu de façon à ce que chaque piste lue soit analysée par une et une seule photodiode.

A noter qu'il est avantageux de ne pas déplacer l'élément mécanique en contact avec la bande (le transducteur).

Le système de suivi de piste TL5 peut être réalisé comme cela est représenté en figure 3. Il comporte une lame de verre à face parallèle TL7 disposée sensiblement parallèlement au détecteur TL6 et tournant autour d'un axe perpendiculaire à la plus grande longueur du transducteur TL1. La rotation est contrôlée par un électro-aimant TL8 et un noyau plongeur TL9 solidaire de la lame TL7. L'électro-aimant reçoit des informations électriques de suivi de piste et permet d'orienter la lame de façon à dévier convenablement le faisceau provenant du transducteur TL1 vers le détecteur TL6 et à affecter à chaque photodiode du détecteur TL6 un faisceau de lecture de piste transmis par le transducteur TL1.

La commande de la lame TL7 peut également être assurée par tout dispositif tel qu'un dispositif piézoélectrique.

Le suivi de piste pourrait également être assuré en déplaçant les uns par rapport aux autres le détecteur TL6, l'optique TL4, le transducteur TL1.

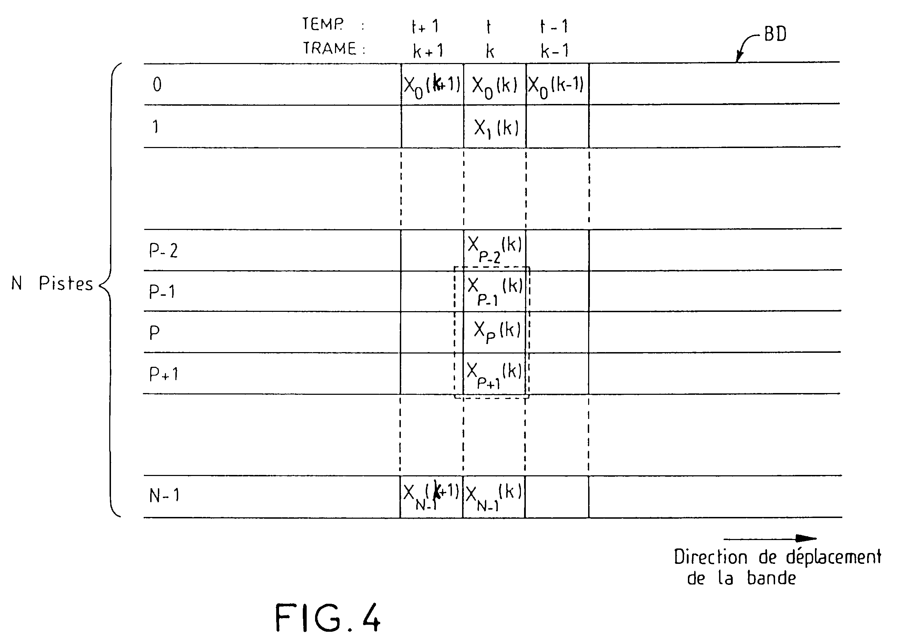

En se reportant à la figure 4, on va maintenant décrire un exemple d'une disposition des informations et des pistes sur la bande magnétique BD en figure 1.

A l'instant du temps t, le capteur fractionné lit les N échantillons d'informations X0(k), X1(k), ..., Xp-1(k), Xp(k), Xp+1(k), ..., XN-1(k) qui constituent une trame k. Selon cet exemple simplifié, on supposera que ces échantillons d'informations, qui correspondent à une trame de pixels d'entrée, avaient été enregistrés en parallèle par la tête d'enregistrement MT1. Pourtant les pixels provenants d'une trame d'entrée peuvent être enregistrés d'une façon décalée et peuvent, à la lecture, être suréchantillonnés de telle façon que l'information dans la trame lue à l'instant t ne corresponde pas à l'information de la trame d'entrée. Ceci ne change pas le principe de l'invention.

On rappelle tout d'abord le principe de correction de diaphonie. Pour connaître la diaphonie que subit une piste Xp, due aux premiers voisins par exemple, on considère les informations provenant des pistes voisines; les échantillons Xp-1 et Xp+1 dans ce cas. Ces informations sont encadrées par les lignes en pointillés en figure 4.

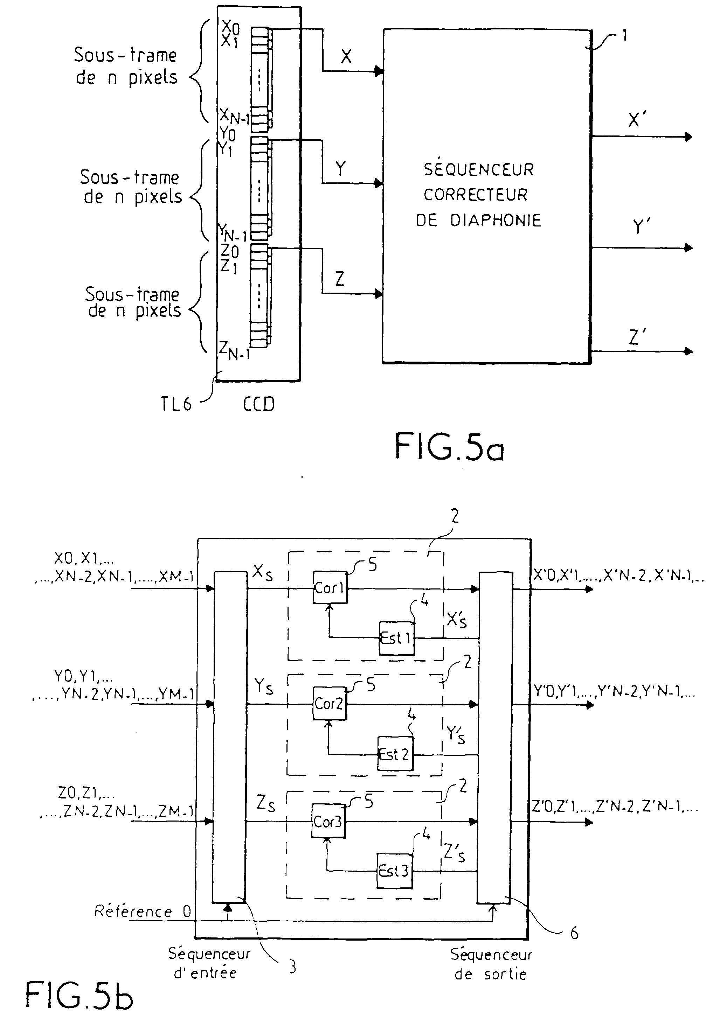

En se reportant à la figure 5a, on va maintenant décrire un exemple d'application pour un capteur CCD fractionné à trois sorties. Dans cet exemple le capteur CCD fractionné TL6 lit 3N échantillons et produit trois trains notés X, Y et Z. Chaque train présente une succession de sous-trames composées d'échantillons série repérés de 0 à M-1. Les informations dans les trois sous-trames constituent une trame. Les trois sorties du CCD sont appliquées à l'entrée du séquenceur-correcteur de diaphonie 1.

La structure interne du séquenceur-correcteur 1 apparaît figure 5b et utilise dans ce cas trois circuits de correction de diaphonie 2.

On rappelle que, à l'entrée de chaque circuit de correction 2, on a besoin de trois échantillons successifs, dans le cas où on ne considère que les premiers voisins correspondant à une piste centrale et à ses deux voisines droite et gauche. Pourtant, dans un train d'un CCD multi-sorties, pour les échantillons situés en bout de chaque sous-trame, un des échantillons voisins appartient à un train différent. Un séquenceur d'entrée 3 devra alors assurer la gestion entre les trains d'échantillons pour disposer d'informations correctes à l'instant approprié.

Le signal de référence 0 est utilisé par les séquenceurs pour l'aiguillage des données.

Un avantage de cette réalisation est que chaque circuit de correction de diaphonie 2 est le même que celui déjà développé pour le système d'un seul train et décrit dans les deux brevets déjà cités.

Cette structure est détaillée en figure 5c. Les échantillons successifs sont reçus par un circuit de correction de diaphonie 5 et effectue la correction de diaphonie du signal Sp en faisant l'opération suivante:

$$S'p = Sp - (Cdp.Sp+1 + Cgp.Sp-1)$$

Cdp et Cgp sont les coefficients de diaphonie calculées par l'opérateur d'estimation 4 et qui représentent la diaphonie qui peut exister sur l'échantillon de la piste p due aux échantillons situés sur une piste à sa droite (d) et à sa gauche (g) sur la bande en l'observant dans la direction de son déplacement.

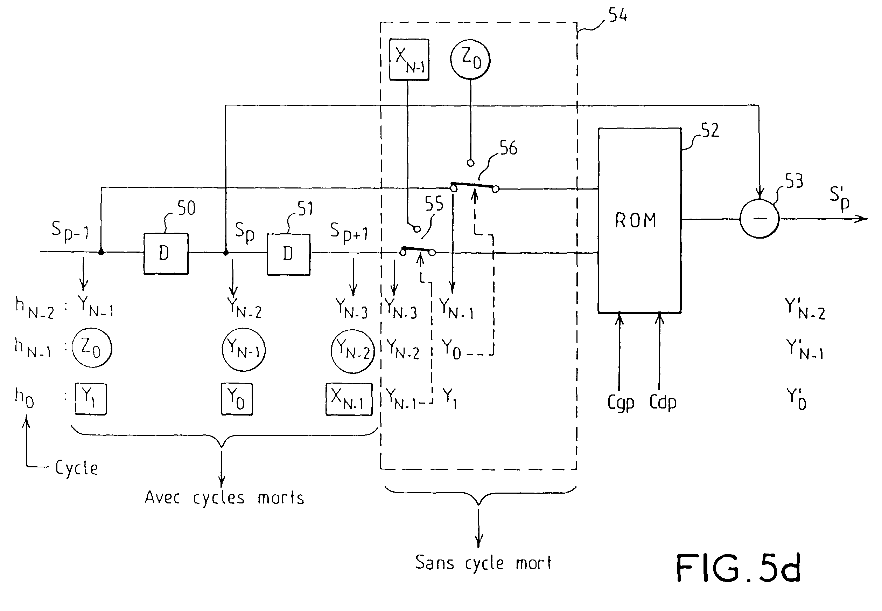

La figure 5d représente un exemple de réalisation de l'opérateur de correction 5. Ce circuit comporte deux circuits à retards 50, 51 permettant de remettre en phase les signaux Sp-1, Sp, Sp+1 qui sont supposés reçus en série. Un circuit 52 de type ROM reçoit les coefficients de diaphonie Cgp et Cdp ainsi que les signaux Sp-1 et Sp+1, et fournit en échange Cdp.Sp+1 + Cgp.Sp-1. Ce résultat est transmis au circuit de soustraction 53 qui effectue la différence entre ce résultat et la valeur du signal Sp. On obtient ainsi le signal corrigé en diaphonie S'p. Le circuit de multiplexage 54 n'est pas essentiel et sera décrit ultérieurement. L'opérateur de correction peut également être réalisé avec des multiplieurs binaires.

L'opérateur d'estimation de diaphonie 4 est connecté en sortie du circuit de correction de diaphonie 5 et effectue une estimation de diaphonie qui représente les coefficients de diaphonie décrits ci-dessus. L'estimation de la valeur instantanée de diaphonie gauche se fait en effectuant le produit de la valeur d'un échantillon par le signe de l'échantillon situé à sa gauche. De même l'estimation de la valeur instantanée de diaphonie droite se fait en multipliant la valeur d'un échantillon par le signe de l'échantillon situé à sa droite. En fait, comme le calcul de diaphonie 4 est connecté en sortie de l'opérateur de correction de diaphonie 5, l'opérateur d'estimation de diaphonie effectue une estimation de diaphonie résiduelle d'un signal supposé déjà corrigé en diaphonie. Ainsi, on obtient:

$$edp = S'p * Sgn[S'p+1]$$

et

$$egp = S'p * Sgn[S'p-1]$$

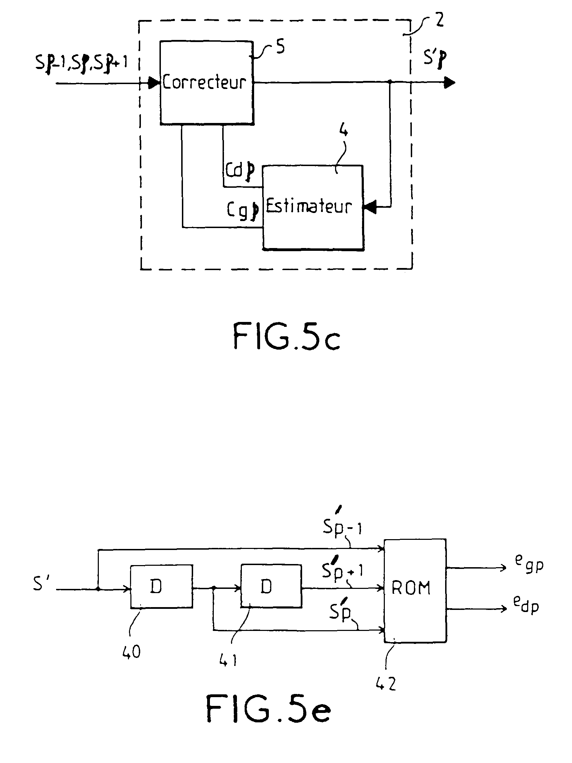

La figure 5e donne un exemple de circuit d'estimation de diaphonie 4 dans lequel les signaux S'p-1, S'p, S''p+1 arrivent en série. Des circuits à retard 40, 41 recalent en phase ces signaux et un circuit 42 par exemple de type mémoire ROM calcule la diaphonie résiduelle edp et egp.

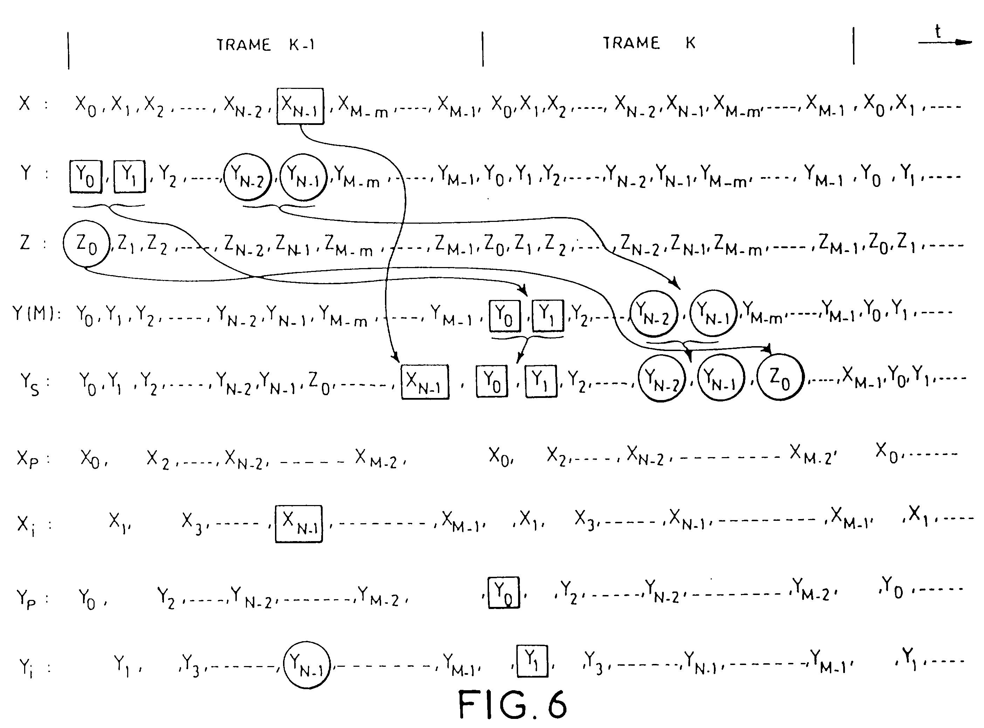

On décrira maintenant le fonctionnement du séquenceur d'entrée 3 avec l'aide de la figure 6. On supposera que le capteur CCD fractionné TL6 lit les 3N pistes et produit trois sorties notées X, Y et Z séquencées de la manière montrée sur la figure 6. Cela veut dire que chaque sortie présente une succession de sous-trames composées d'échantillons série repérés (de 0 à M-1) dans chaque trame (k-1, k). Chaque sous-trame contient N échantillons (X0 à XN-1) d'informations et m cycles "morts" (XM-m à XM-1) qui sont générés pendant la période d'évacuation des charges du CCD.

A titre d'exemple, seule l'application du traitement pour la sortie Y sera détaillée; la même démarche est valable pour les autres sorties.

On rappelle que, l'objet du séquenceur d'entrée est de générer des triplets de trois échantillons successifs pour chaque échantillon dans le train Y correspondant à un échantillon central et à ses deux voisines droite et gauche. Tant que le traitement, simultané sur les 3 trains X, Y et Z, s'applique aux échantillons de rang 1 à N-2, le séquenceur est quasi-transparent et n'intervient pas sur l'agencement des échantillons puisque chaque correcteur dispose d'un triplet de type [Sp-1, Sp, Sp+1] avec S une sortie CCD (X, Y ou Z) et p une piste.

Pourtant pour le traitement des échantillons de rang 0, par exemple Y0, il faut fournir au circuit de correction de diaphonie 2 du train Y le triplet de 3 échantillons consécutifs [XN-1,Y0,Y1] appartenant à la même trame. Les échantillons de ce triplet pour la trame k-1 sont indiqués dans des carrés en figure 6. Comme l'échantillon XN-1 n'est disponible qu'à la fin de la trame k-1, le séquenceur 3 mémorise le signal Y pendant la trame k-1 et produit le signal Y(M) qui représente le train Y retardé d'une trame. Pendant la trame k qui suit, on substitue l'échantillon précédent Y0 du signal Y(M), soit YM-1, par l'échantillon XN-1, provenant du train X, pour le traitement de rang 0 (c'est-à-dire Y0 dans cet exemple). On obtient ainsi le train Ys qui contient les triplets correctement ordonnés.

Pour le traitement des échantillons de rang N-1, par exemple YN-1, le circuit de correction de diaphonie 2 du train Y attend le triplet [YN-2,YN-1,Z0]. Les échantillons de ce triplet pour la trame k-1 sont indiqués dans des cercles en figure 6. La mémorisation de la valeur de Z0, précédemment effectuée au début de la trame k-1, et son positionnement, dans le train Ys, après l'échantillon YN-1 pendant la trame k assurent le fonctionnement du correcteur pour le rang N-1.

Finalement, en ce qui concerne la première piste, soit l'échantillon X0 selon notre exemple, puisqu'elle ne possède qu'une seule piste voisine (X1), un échantillon de valeur neutre (généralement 0), représentant une seconde piste voisine virtuelle, est inséré pour un fonctionnement correct du circuit de correction de diaphonie. Le même raisonnement s'applique pour le traitement de la piste ZN-1.

De préférence, ce séquencement exploite les cycles "morts" présents dans les sous-trames du CCD pour ne pas modifier la structure de correction de diaphonie. Ca veut dire que, dans notre exemple, les échantillons YM-1 et YM-m, générés par le CCD pendant la période d'évacuation, sont remplacés par les échantillons XN-1 et Z0 respectivement, provenants des autres trains. Ceci est indiqué en figure 6.

Pourtant, il n'est pas nécessaire que le CCD possède des cycles "morts". En fait, l'idée de l'invention est de toujours présenter un triplet de trois échantillons successifs pour chaque échantillon dans le train Y correspondant à un échantillon central et à ses deux voisins droite et gauche. Ceci se fait par la mémorisation des échantillons des trains voisins. S'il n'y a pas assez ou pas du tout de cycles "morts" disponibles pour les échantillons mémorisés on ne peut pas substituer tous les échantillons d'un train sans perdre des échantillons utiles. Pour le traitement de l'échantillon Y0, par exemple, on substitue normalement l'échantillon "mort" YM-1 par l'échantillon XN-1. Cependant, si l'échantillon YM-1 n'existe pas, on trouve l'échantillon utile YN-1 à sa place qui ne peut pas être remplacé par XN-1. Dans ce cas, il faut remplacer l'échantillon utile YN-1 à l'entrée du circuit de correction pendant un seul cycle d'horloge. Ceci se fait, par exemple, à l'aide des circuits de multiplexage 55 et 56 sur la figure 5d. Pour le traitement de l'échantillon Y0, pendant le cycle d'horloge h0, on remplace l'échantillon utile YN-1 par l'échantillon XN-1. De même, pour le traitement de l'échantillon YN-1, pendant le cycle d'horloge hN-1, on remplace l'échantillon utile Y0 par l'échantillon Z0.

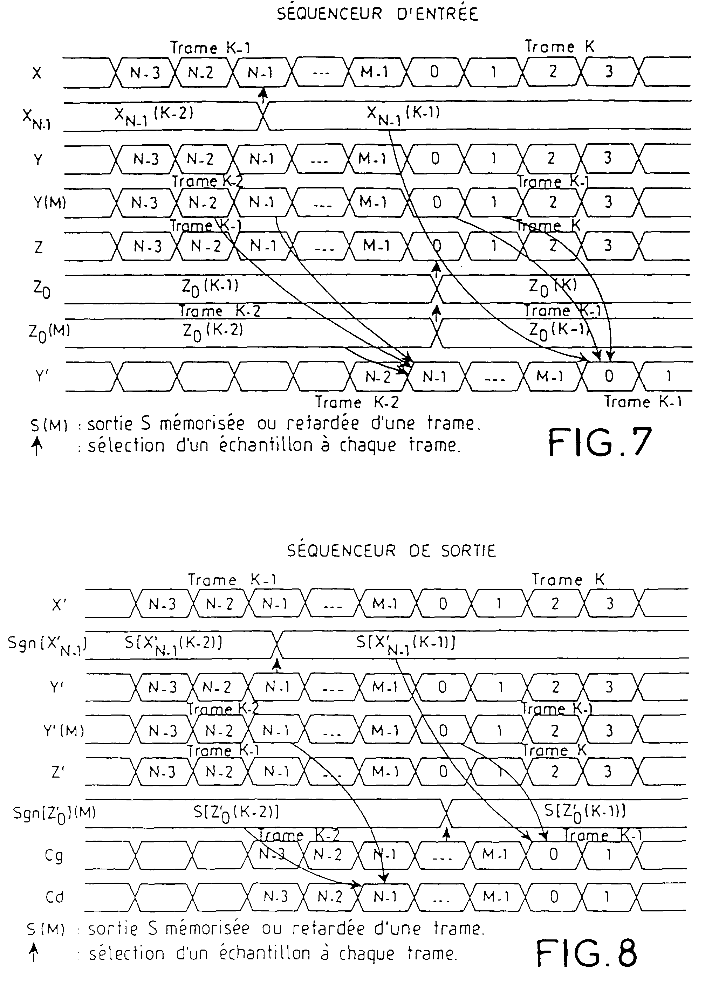

La figure 7 présente un séquencement des données et des calculs selon une possible réalisation du séquenceur d'entrée. Les trois flèches à droite montrent le triplet d'échantillons [XN-1,Y0,Y1] qui est utilisé pour calculé la diaphonie sur l'échantillon Y0. Les trois flèches à gauche montrent le triplet [YN-2,YN-1,Z0] nécessaire pour calculer la diaphonie sur YN-1.

De plus, il n'est pas nécessaire de mémoriser tous les échantillons dans la sous-trame Y. Par exemple, pour calculer la diaphonie sur Y0, on peut mémoriser seulement les échantillons Y0 et Y1 pendant le trame k-1, et calculer la diaphonie sur Y0 dans la trame k qui suit. Comme décrit ci-dessus, on peut exploiter les cycles "morts" ou utiliser des circuits de multiplexage dans le cas où il n'y en a pas. En tout cas, l'échantillon Y0 corrigé en diaphonie n'est plus ordonné dans la sous-trame provenant de la trame précédente, mais ceci peut être remis en ordre en aval par un circuit de remise en ordre approprié.

La fonctionnement du séquenceur d'entrée est identique pour les sorties X et Z.

Un séquenceur de sortie 6 est nécessaire pour le bon fonctionnement des opérateurs d'estimation de diaphonie 4 car, comme décrit ci-dessus, ils ont besoin, eux aussi, des échantillons voisins. Le fonctionnement du séquenceur de sortie 6 est similaire à celui du séquenceur d'entrée 2. La figure 8 présente le séquencement des données et des calculs selon une possible réalisation de ce séquenceur.

En particulier, les circuits d'estimation des coefficients 4 attendent un triplet [Sgn(S'p-1),S'p,Sgn(S'p+1)] avec S' d'un train d'échantillons corrigés en diaphonie, dans lesquels Sgn représente la fonction signe et p une piste. Pour les rangs 1 à N-2, le séquenceur de sortie n'a pas d'action sur l'ordre des échantillons.

Pour le traitement des échantillons de rang 0, une mémorisation complète de la trame en cours, soit Y', permet d'attendre l'information X'N-1 de la sortie voisine mais appartenant à la même trame. Le signe de X'N-1 est utilisé en lieu et place de l'échantillon précédent Y'0 (soit Y'M-1) et l'estimation des coefficients de diaphonie peut être effectuée pour les échantillons de ce rang.

Pour les échantillons de rang N-1 on poursuit la même démarche: le signe de Z'0 est mémorisé et inséré au bon moment pour former le triplet [Sgn(Y'N-2), Y'N-1,Sgn(Z'0)] désiré à l'entrée de l'estimateur de diaphonie.

Finalement, le traitement des pistes extérieures, X'0 et Z'N-1 en l'occurrence, impose l'utilisation d'échantillons de valeur neutre pour l'estimateur afin de simuler la présence de pistes voisines.

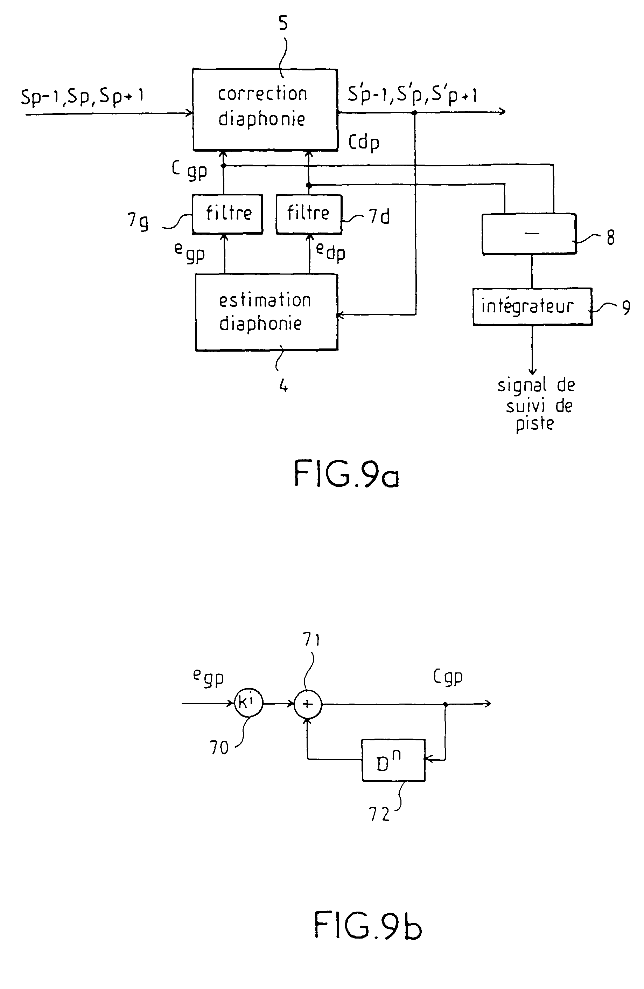

La figure 9a représente une variante préférentielle de réalisation des correcteurs de diaphonie 2 selon l'invention. Dans ce circuit, les erreurs de diaphonie résiduelles sont transmis à des filtres intégrateurs 7g et 7d. Ces filtres intègrent continuellement les coefficients de diaphonie. L'opération réalisée par les filtres intégrateurs est la suivante:

$$Cgp(k) = Cgp(k-1) + k'egp$$

et

$$Cdp(k) = Cdp(k-1) + k'edp$$

c'est-à-dire que, pour un échantillon dans la trame k, la nouvelle valeur estimée du coefficient de diaphonie Cgp ou Cdp est égale à la valeur du même échantillon dans la trame k-1 corrigé d'une fraction k' de l'erreur résiduelle egp ou edp. Ici les coefficients de diaphonie de la réalisation précédente ont été renommées erreurs résiduelles dans la réalisation actuelle.

La figure 9b représente un exemple de réalisation de ces filtres. Un circuit 70 pondère à l'aide d'un coefficient k' (inférieur à 1) le coefficient de diaphonie résiduelle egp. Le coefficient pondéré est transmis à une entrée d'un circuit d'addition 71 dont la sortie est rebouclée sur une autre entrée par un circuit mémoire 72. On voit donc que le coefficient de diaphonie résiduelle egp, pondéré par le coefficient k' est additionné à la valeur du coefficient de diaphonie calculé précédemment pour la même piste.

Après filtrage de cette erreur instantanée, les coefficients sont disponibles après une étape de mémorisation nécessaire pour les mettre en phase pour un nouveau calcul de correction. C'est à cause du fait que l'on considère que la diaphonie ne change quasiment pas entre des différents échantillons, que l'on peut corriger les échantillons en utilisant les coefficients calculés à un instant précédent.

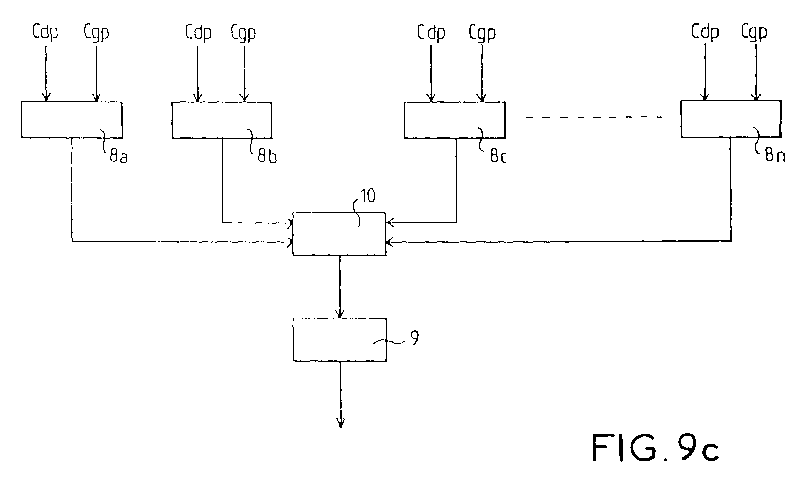

Par ailleurs, le circuit de figure 9a permet également de calculer un signal de suivi de piste pour commander le dispositif de suivi de piste TL5 décrit précédemment ou les positions respectives du détecteur TL6, de l'optique TM4 et du transducteur TL1. Cela est réalisé à l'aide d'un circuit de soustraction 8 connecté aux sorties des filtres 7g et 7d, et qui effectue la différence entre les coefficients de diaphonie. Pour éviter que toute variation brutale des coefficients de diaphonie ait un effet immédiat sur le dispositif de suivi de piste, la différence Cgp-Cgd est intégrée sur les n pistes que possède le support d'enregistrement. On obtient un signal de suivi de piste qui peut être moyenné sur l'ensemble des pistes pour donner un résultat insensible aux phénomènes affectant une piste particulière. Plus précisément, puisque le système de l'invention calcule les coefficients de diaphonie de plusieurs fractions d'un CCD, il convient de réaliser l'intégration sur l'ensemble de ces coefficients. C'est pourquoi, comme représenté en figure 9c, on prévoit plusieurs circuits de soustraction 8a à 8n qui effectuent la différence Cgp-Cdp pour chaque fraction du CCD. Un lecteur multiplexeur 10 lit successivement les sorites des circuits de soustraction 8a à 8n et transmet à l'intégrateur 9 successivement les différences Cgp-Cdp pour toutes les fractions. Le signal de suivi de piste est donc obtenu à partir d'une valeur moyenne basée sur les coefficients de diaphonie de toutes les fractions du CCD.

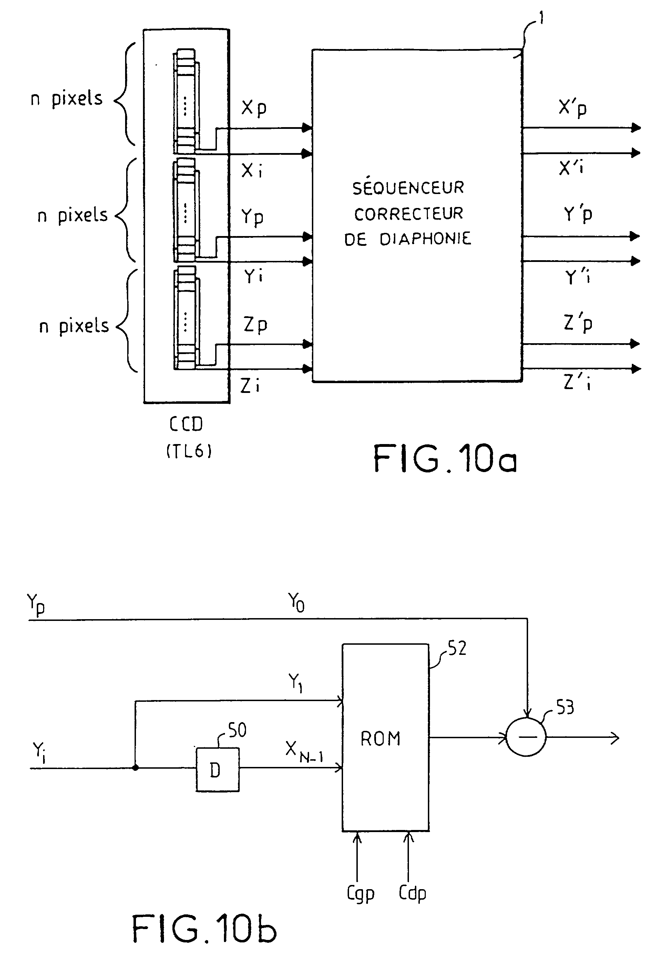

Le principe de correction de diaphonie décrit ci-dessus fonctionne avec des trains d'échantillons série multiplexés par sortie. Pourtant le principe s'applique également à un capteur CCD qui produit les trains d'échantillons non-multiplexés (voies paires et impaires différenciées: 0,2,4,...,N-2 et 1,3,...,N-1) tel que décrit dans la Demande de Brevet français n° 94 14147 citée ci-dessus. La figure 10 représente un schéma de principe pour une utilisation avec des sorties non multiplexées. Dans cet exemple, le capteur CCD fractionné TL6 produit trois paires de trains pairs et impairs Xp, Xi, Yp, Yi et Zp, Zi. Chaque train pair présente une succession de sous-trames composées d'échantillons série repérés de 0 à M-2. Chaque train impair présente une succession repérée de 1 à M-1. Ceci est montré sur la figure 6. Chaque train contient un échantillon qui est en bout du CCD et doit être corrigé à l'aide du système de l'invention. Par exemple, le train Yp contient l'échantillon Y0 et le train Yi contient l'échantillon YN-1 dont le traitement a été considéré ci-dessus.

Pour le traitement de l'échantillon Y0, il faut fournir au circuit de correction le même triplet [YN-1, Y0, Y1] que dans le cas du train multiplexé décrit ci-dessus. Les échantillons de ce triplet sont indiqués dans des carrés en figure 6. Dans ce cas, on substitue l'échantillon précédent Y1, soit YM-1 par l'échantillon XN-1, provenant du train impair Xi.

L'invention utilise un circuit de correction pour chaque train. Ces circuits sont les circuits décrits dans la Demande de Brevet français n° 94 14147 modifiés selon les principes décrits ci-dessus. La figure 10b représente un exemple de réalisation d'un circuit de correction pour le train Yp. Le circuit dispose du train Yp qui contient l'échantillon Y0 et du train Yi qui contient l'échantillon Y1 et l'échantillon XN-1 qui remplace l'échantillon "mort" YM-1.

Dans le cas où il n'y a pas de cycle mort, le même principe de circuit que celui de la figure 5d est applicable de façon à substituer à YN-1 l'échantillon XN-1.

L'invention a été décrite en application à la lecture d'une bande magnétique, mais elle est applicable à la lecture de tout support d'informations (bande, disque, carte, ...) lisible par tous moyens (moyens magnétiques, moyens optiques, ...). De plus, dans la description qui précède, les informations à lire sont organisées sous forme de pistes, mais l'invention est également applicable à la lecture d'informations organisées sous forme de trames indépendantes voire même d'une trame unique.

## Revendications

1. Dispositif de lecture d'un support d'enregistrement (BD) comportant au moins une trame (BD1, ..., BDn) d'informations disposées côte à côte sur le support d'enregistrement, et comportant :

   un moyen de lecture (TL6) fractionné pour lire en parallèle la ou les trames d'information et pour fournir sur des sorties séries respectives plusieurs trains d'échantillons série (X,Y,Z) correspondant aux informations lues par les différentes fractions du moyen de lecture ;
   un séquenceur d'entrée (3) comprenant des moyens pour recevoir les trains d'échantillons fournis par le moyen de lecture, des moyens pour former un train modifié (Xs,Ys ou Zs) à partir de chaque train reçu (X, Y ou Z) et d'échantillons d'au moins un autre train reçu (X, Y ou Z), et des moyens pour transmettre en série chaque train modifié (Xs,Ys ou Zs) sur une sortie distincte ; et
   une pluralité de circuits de correction de diaphonie (2), chaque circuit de correction (2) recevant en série dudit séquenceur d'entrée un des trains modifiés (Xs, Ys ,Zs) et ayant des moyens pour corriger la diaphonie sur chaque échantillon (Sp) du train modifié reçu avec l'aide des échantillons voisins (Sp-1,Sp+1) du même train modifié reçu et pour fournir un train d'échantillons corrigé en diaphonie (X',Y',Z').

2. Dispositif selon la revendication 1, caractérisé en ce que chaque circuit de correction de diaphonie (2) comporte :

   un opérateur de correction de diaphonie (5) recevant les échantillons à corriger (Sp-1,Sp, Sp+1) et des coefficients de diaphonie (Cgp, Cdp), qui représentent la diaphonie qui peut exister des informations voisines (Sp-1,Sp+1) sur l'information centrale (Sp), et calculant les échantillons corrigés en diaphonie (S'p-1,S'p, S'p+1) ; et
   un opérateur d'estimation de diaphonie (4) calculant les coefficients de diaphonie (Cgp,Cdp).

3. Dispositif selon la revendication 2, caractérisé en ce qu'il comporte :

   un séquenceur de sortie (6) recevant les trains d'échantillons corrigés en diaphonie (X',Y',Z') et fournissant à chaque opérateur d'estimation (4) un train d'échantillons modifié (X's,Y's,Z's) contenant tous les échantillons nécessaires à l'estimation des coefficients de diaphonie.

4. Dispositif selon l'une des revendications 1 à 3, caractérisé en ce que :

   chaque train d'échantillons modifié fournis par le séquenceur d'entrée (3) ou le séquenceur de sortie (6) contient les échantillons d'un premier train (X,Y,Z ou X',Y',Z'), des échantillons (XN-1,Z0) aux bouts du train provenant d'autres trains (X,Z).

5. Dispositif selon l'une des revendications 1 à 4, caractérisé en ce que le séquenceur d'entrée (3) ou le séquenceur de sortie (6) comporte :

   des moyens permettant de mémoriser au moins deux premiers échantillons de chaque train (Y0,Y1) qui voisinent avec un train voisin.

6. Dispositif selon l'une des revendications 1 à 5, caractérisé en ce que le séquenceur d'entrée (3) ou le séquenceur de sortie (6) comporte :

   des moyens permettant de remplacer, pour chaque train (Y), les cycles morts (YM-1,YM-m) pendant la période d'évacuation des charges d'un capteur CCD du moyen de lecture par les échantillons voisins (XN-1,Z0) provenants des trains voisins (X,Z).

7. Dispositif selon l'une des revendications 2 à 6, caractérisé en ce que l'opérateur de correction de diaphonie (5) comprend :

   des moyens (52,53) effectuant la correction de diaphonie des trains d'échantillons (X,Y,Z) en faisant les opérations suivantes :

   $$S'p = Sp - (Cdp.Sp+1 + Cgp.Sp-1)$$

   Sp étant un échantillon à corriger en diaphonie. Cdp, Cgp étant les coefficients de diaphonie calculées par l'opérateur d'estimation (4) qui représentent la diaphonie qui peut exister sur un échantillon (p) due aux échantillons situés à sa droite (d) ou gauche (g) sur la bande en l'observant dans la direction de sa déplacement. S'p étant un échantillon corrigé en diaphonie.

8. Dispositif selon les revendications 2 à 7, caractérisé en ce que l'opérateur d'estimation (4) comporte :

   des moyens calculant les valeurs edp et egp des diaphonies en faisant les opération suivantes :

   $$edp = S'p * Sgn[S'p+1]$$

   et

   $$egp = S'p * Sgn[S'p-1]$$

   S'p étant un échantillon corrigé en diaphonie.

9. Dispositif selon l'une des revendications 2 à 8, caractérisé en ce que chaque circuit de correction de diaphonie (2) comporte entre l'opérateur d'estimation de diaphonie (4) et l'opérateur de correction de diaphonie (5) un circuit de filtrage (7g,7d) par coefficient de diaphonie comprenant :
   un circuit de pondération (70) recevant un signal de diaphonie (egp) et le pondérant à l'aide d'un coefficient de pondération k, un circuit d'addition (71) recevant sur une première entrée ce signal pondéré et possédant sa sortie rebouclée sur une deuxième entrée par un circuit en mémoire (72) appliquant sur cette deuxième entrée, un coefficient de diaphonie calculé antérieurement pour la même information.

10. Dispositif selon l'unes des revendications 2 à 9, caractérisé en ce qu'il comporte :
    un circuit de soustraction (8) connecté à l'opérateur d'estimation de diaphonie (4), recevant les coefficients de diaphonie (Cgp,Cdp), en calculant leur différence et fournissant un signal de correction de suivi de piste.

11. Dispositif selon la revendication 10, caractérisé en ce qu'il comporte un circuit de soustraction (8a-8n) pour les coefficients de diaphonie de chaque fraction du capteur CCD du moyen de lecture (TL6), un lecteur multiplexeur (10) lisant successivement les sorties des deux circuits de soustraction et fournissant les résultats des différences à un circuit intégrateur (9) qui fournit un signal de suivi de piste.

12. Dispositif selon l'une des revendications 1 à 11, caractérisé en ce que :

chaque sortie du moyen de lecture (TL6) fractionné est adapté et fournit au moins un premier (Xp,Yp,Zp) et un deuxième (Xi,Yi,Zi) trains d'échantillons série dont les échantillons correspondent à des informations alternées sur la bande ; et
en ce qu'il comporte :
un circuit de correction de diaphonie (2) pour chaque train d'échantillons fournissant un train d'échantillons corrigé en diaphonie (X'p,X'i,Y'p, Y'i,Z'p,Z'i).

13. Système de lecture d'un support d'enregistrement (BD) comportant plusieurs pistes d'informations (BD1,BD2,BDn) enregistrées en parallèle comportant :

    un support d'enregistrement (BD) ;
    des moyens optiques (TL2) pour transmettre un faisceau optique au support d'enregistrement qui retransmet ce faisceau ;
    des moyens de détection optique (TL4) pour recevoir le faisceau retransmis par le support d'enregistrement ;
    caractérisé en ce qu'il comporte :
    un dispositif de lecture selon l'une des revendications 1 à 12.

**Patentansprüche**

1. Vorrichtung zum Auslesen eines Aufzeichnungsträgers (BD), der mindestens einen Rahmen (BD1, ..., BDn) von Seite an Seite auf dem Aufzeichnungsträger aufgezeichneten Informationen besitzt und aufweist:

   - ein unterteiltes Lesemittel (TL6), um parallel den oder die Informationsrahmen zu lesen und an jeweiligen Serienausgängen mehrere Signalzüge (X, Y, Z) von Serien-Tastproben entsprechend den von den verschiedenen Teilen des Lesemittels gelesenen Informationen zu liefern,
   - eine Eingangsfolgeschaltung (3), die Mittel zum Empfang der Signalzüge von von den Lesemitteln gelieferten Tastproben, Mittel zur Bildung eines veränderten Signalzugs (Xs, Ys oder Zs) ausgehend von jedem empfangenen Signalzug (X, Y oder Z) und von Tastproben mindestens eines weiteren empfangenen Signalzugs (X, Y oder Z) zu bilden, sowie Mittel enthält, um in Serie jeden veränderten Signalzug (Xs, Ys oder Zs) an einen eigenen Ausgang zu übertragen,
   - und mehrere Diaphonie-Korrekturschaltungen (2), die je in Reihe von der Eingangsfolgeschaltung einen der veränderten Signalzüge (Xs, Ys, Zs) empfangen und Mittel zur Korrektur der Diaphonie an jeder Tastprobe (Sp) des empfangenen veränderten Signalzugs mithilfe der benachbarten Tastproben (Sp-1, Sp+1) des gleichen empfangenen veränderten Signalzugs und zur Lieferung eines hinsichtlich der Diaphonie korrigierten Signalzugs von Tastproben (X', Y', Z') aufweisen.

2. Vorrichtung nach Anspruch 1, dadurch gekennzeichnet, daß die Schaltung zur Korrektur der Diaphonie (2) aufweist:

 - einen Diaphonie-Korrekturoperator (5), der die zu korrigierenden Tastproben (Sp-1, Sp, Sp+1) sowie Diaphoniekoeffizienten (Cgp, Cdp) empfängt, die die Diaphonie bezeichnen, welche auf die zentrale Information (Sp) von den benachbarten Informationen (Sp-1, Sp+1) einwirkt, und der die hinsichtlich der Diaphonie korrigierten Tastproben (S'p-1, S'p, S'p+1) berechnet,
 - und einen Diaphonie-Schätzoperator (4), der die Diaphoniekoeffizienten (Cgp, Cdp) berechnet.

3. Vorrichtung nach Anspruch 2, dadurch gekennzeichnet, daß er eine Ausgangsfolgeschaltung (6) enthält, die die Signalzüge von hinsichtlich der Diaphonie korrigierten Tastproben (X', Y', Z') empfängt und jedem Schätzoperator (4) einen veränderten Signalzug (X's, Y's, Z's) von Tastproben liefert, der alle für die Abschätzung der Diaphoniekoeffizienten erforderlichen Tastproben enthält.

4. Vorrichtung nach einem der Ansprüche 1 bis 3, dadurch gekennzeichnet, daß jeder veränderte Signalzug von von der Eingangs- oder Ausgangsfolgeschaltung (3, 6) gelieferten Tastproben die Tastproben eines ersten Signalzugs (X, Y, Z oder X', Y', Z') der Tastproben (XN-1, Z0) an den Enden des Signalzugs enthält, die von anderen Signalzügen (X, Z) stammen.

5. Vorrichtung nach einem der Ansprüche 1 bis 4, dadurch gekennzeichnet, daß die Eingangs- oder Ausgangsfolgeschaltung (3, 6) Mittel aufweist, mit denen mindestens zwei erste Tastproben jedes Signalzugs (Y0, Y1) gespeichert werden können, die einem benachbarten Signalzug benachbart sind.

6. Vorrichtung nach einem der Ansprüche 1 bis 5, dadurch gekennzeichnet, daß die Eingangs- oder Ausgangsfolgeschaltung (3, 6) Mittel aufweist, mit denen für jeden Signalzug (Y) die Totzyklen (YM-1, YM-m) während der Ladungsabfuhr einer CCD-Leiste im Lesemittel durch die benachbarten Tastproben (XN-1, Z0) ersetzt werden können, die von den benachbarten Signalzügen (X, Z) stammen.

7. Vorrichtung nach einem der Ansprüche 2 bis 6, dadurch gekennzeichnet, daß der Diaphonie-Korrekturoperator (5) Mittel (52, 53) aufweist, die die Diaphoniekorrektur der Signalzüge (X, Y, Z) von Tastproben mithilfe der folgenden Operation durchführen:

$$S'p = Sp - (Cdp \cdot Sp+1 + Cgp \cdot Sp-1)$$

wobei gilt: Sp ist eine hinsichtlich der Diaphonie zu korrigierende Tastprobe, Cgp sowie Cdp sind die vom Schätzoperator (4) berechneten Diaphoniekoeffizienten, die die Diaphonie angeben, die auf eine Tastprobe (p) aufgrund der rechts davon (d) oder links davon (g) auf dem Band liegenden Tastproben in Bandlaufrichtung gesehen einwirken, und S'p ist eine hinsichtlich der Diaphonie korrigierte Tastprobe.

8. Vorrichtung nach einem der Ansprüche 2 bis 7, dadurch gekennzeichnet, daß der Schätzoperator (4) Mittel aufweist, die die Werte edp und egp der Diaphonie aufgrund folgender Operationen berechnen:

$$edp = S'p \cdot Sgn[S'p+1]$$

$$egp = S'p \cdot Sgn[S'p-1]$$

wobei S'p eine hinsichtlich der Diaphonie korrigierte Tastprobe ist.

9. Vorrichtung nach einem der Ansprüche 2 bis 8, dadurch gekennzeichnet, daß jeder Diaphonie-Korrekturschaltung (2) zwischen dem Diaphonie-Schätzoperator (4) und dem Diaphonie-Korrekturoperator (5) eine Filterschaltung (7g, 7d) je Diaphoniekoeffizient besitzt, die eine Schaltung (70) zur Gewichtung, die ein Diaphoniesignal (egp) empfängt und es mithilfe eines Gewichtungskoeffizienten k gewichtet, und eine Addierschaltung (71) enthält, die an einem ersten Eingang dieses gewichtete Signal empfängt und deren Ausgang auf einen zweiten Eingang über eine Speicherschaltung (72) zurückgeschleift ist und an diesen zweiten Eingang einen vorher für die gleiche Information berechneten Diaphoniekoeffizienten anlegt.

10. Vorrichtung nach einem der Ansprüche 2 bis 9, dadurch gekennzeichnet, daß sie eine Subtraktionsschaltung (8) aufweist, die an den Diaphonie-Schätzoperator (4) angeschlossen ist, die Diaphoniekoeffizienten (Cgp, Cdp) empfängt, ihre Differenz bildet und ein Spurverfolgungs-Korrektursignal liefert.

**11.** Vorrichtung nach Anspruch 10, dadurch gekennzeichnet, daß sie eine Subtraktionsschaltung (8a bis 8n) für die Diaphoniekoeffizienten jedes Teils der CCD-Leiste im Lesemittel (TL6) aufweist, wobei ein Leser-Multiplexer (10) nacheinander die Ausgänge der beiden Subtraktionsschaltungen liest und die Ergebnisse der Differenzen an eine Integrationsschaltung (9) liefert, die ein Spurverfolgungssignal erzeugt.

**12.** Vorrichtung nach einem der Ansprüche 1 bis 11, dadurch gekennzeichnet, daß jeder Ausgang des unterteilten Lesemittels (TL6) mindestens einen ersten Signalzug (Xp, Yp, Zp) und einen zweiten Signalzug (Xi, Yi, Zi) von Serientastproben liefern kann, deren Tastproben abwechselnden Informationen auf dem Band entsprechen, und daß die Vorrichtung eine Diaphonie-Korrekturschaltung (2) für jeden Signalzug von Tastproben besitzt, die einen hinsichtlich der Diaphonie korrigierten Signalzug (X'p, X'i, Y'p, Y'i, Z'p, Z'i) liefert.

**13.** System zum Lesen der Informationen von einem Aufzeichnungsträger (BD), der mehrere Spuren (BD1, BD2, ..., BDn) enthält, die parallel aufgezeichnet sind, wobei das System einen Aufzeichnungsträger (BD), optische Mittel (TL2) zur Übertragung eines Lichtstrahls auf den Aufzeichnungsträger, der diesen Strahl weiterleitet, und Mittel (TL4) zur optischen Erfassung des vom Aufzeichnungsträger weitergeleiteten Strahls aufweist, dadurch gekennzeichnet, daß es eine Lesevorrichtung nach einem der Ansprüche 1 bis 12 enthält.

**Claims**

**1.** Device for reading a recording medium (BD) comprising at least one frame (BD1, ..., BDn) of information arranged side by side on the recording medium and comprising:

a reading means (TL6) partitioned so as to read in parallel the information frame or frames and to deliver on respective serial outputs several serial sample trains (X, Y, Z) corresponding to the information read by the various partitions of the reading means;
an input sequencer (3) comprising means for receiving the sample trains delivered by the reading means, means for forming a modified train (Xs, Ys or Zs) from each train received (X, Y or Z) and from samples of at least one other train received (X, Y or Z), and means for transmitting in series each modified train (Xs, Ys or Zs) on a separate output; and
a plurality of crosstalk correction circuits (2), each correction circuit (2) receiving in series from the said input sequencer one of the modified trains (Xs, Ys, Zs) and having means for correcting the crosstalk on each sample (Se) of the modified train received with the aid of the neighbouring samples (Se-1, Se+1) of the same modified train received and for delivering a crosstalk-corrected sample train (X', Y', Z').

**2.** Device according to Claim 1, characterized in that each crosstalk correction circuit (2) comprises:

a crosstalk correction operator (5) receiving the samples to be corrected (Se-1, Se, Se+1) and crosstalk coefficients (Cle, Cre), which represent the crosstalk which may exist for the neighbouring information (Se-1, Se+1) on the central information (Se), and calculating the crosstalk-corrected samples (S'e-1, S'e, S'e+1); and
a crosstalk estimation operator (4) calculating the crosstalk coefficients (Cle, Cre).

**3.** Device according to Claim 2, characterized in that it comprises:
an output sequencer (6) receiving the crosstalk-corrected sample trains (X', Y', Z') and delivering to each estimation operator (4) a modified sample train (X's, Y's, Z's) containing all the samples necessary for estimating the crosstalk coefficients.

**4.** Device according to one of Claims 1 to 3, characterized in that:
each modified sample train delivered by the input sequencer (3) or the output sequencer (6) contains the samples of a first train (X, Y, Z or X', Y', Z') of the samples (XN-1, Z0) at the extremities of the train which originate from other trains (X, Z).

**5.** Device according to one of Claims 1 to 4, characterized in that the input sequencer (3) or the output sequencer (6) comprises:
means making it possible to store at least two first samples of each train (Y0, Y1) which neighbour a neighbouring train.

**6.** Device according to one of Claims 1 to 5, characterized in that the input sequencer (3) or the output sequencer (6) comprises:
means making it possible to replace, for each train (Y), the dead cycles (YM-1, YM-m) during the charge evacuation period of a CCD sensor of the reading means with the neighbouring samples (XN-1, Z0) originating from the neighbouring trains (X, Z).

**7.** Device according to one of Claims 2 to 6, characterized in that the crosstalk correction operator (5) comprises:

means (52, 53) performing the crosstalk correction of the sample trains (X, Y, Z) by carrying out the following operations:

$$S'e = Se - (Cre.Se+1 + Cle.Se-1)$$

Se being a sample to be crosstalk-corrected; Cre, Cle being the crosstalk coefficients calculated by the estimation operator (4) which represent the crosstalk which may exist on a sample (e) due to the samples situated to its right (r) or left (1) on the tape when looking in the direction of its movement; S'e being a crosstalk-corrected sample.

8. Device according to Claims 2 to 7, characterized in that the estimation operator (4) comprises:

means calculating the values ere and ele of the crosstalks by carrying out the following operations:

$$ere = S'e*Sgn[S'e+1]$$

and

$$ele = S'e*Sgn[S'e-1]$$

S'e being a crosstalk-corrected sample.

9. Device according to one of Claims 2 to 8, characterized in that each crosstalk correction circuit (2) comprises between the crosstalk estimation operator (4) and the crosstalk correction operator (5) a filtering circuit (7l, 7r) per crosstalk coefficient comprising: a weighting circuit (70) receiving a crosstalk signal (ele) and weighting it with the aid of a weighting coefficient k, an addition circuit (71) receiving this weighted signal on a first input and possessing its output looped back onto a second input via a memory circuit (72) applying to this second input a crosstalk coefficient calculated previously for the same information item.

10. Device according to one of Claims 2 to 9, characterized in that it comprises: a subtraction circuit (8) connected to the crosstalk estimation operator (4), receiving the crosstalk coefficients (Cle, Cre), calculating the difference thereof and delivering a tracking correction signal.

11. Device according to Claim 10, characterized in that it comprises a subtraction circuit (8a-8n) for the crosstalk coefficients of each partition of the CCD sensor of the reading means (TL6), a multiplexer reader (10) successively reading the outputs of the two subtraction circuits and delivering the results of the differences to an integrator circuit (9) which delivers a tracking signal.

12. Device according to one of Claims 1 to 11, characterized in that:
each output of the partitioned reading means (TL6) is adapted and delivers at least one first (Xe, Ye, Ze) and one second (Xo, Yo, Zo) serial sample trains whose samples correspond to alternating information on the tape; and
in that it comprises:
a crosstalk correction circuit (2) for each sample train delivering a crosstalk-corrected sample train (X'e, X'o, Y'e, Y'o, Z'e, Z'o).

13. System for reading a recording medium (BD) comprising several information tracks (BD1, BD2, BDn) recorded in parallel comprising:

a recording medium (BD); optical means (TL2) for transmitting an optical beam to the recording medium which retransmits this beam; means of optical detection (TL4) for receiving the beam retransmitted by the recording medium;

characterized in that it comprises:
a reading device according to one of Claims 1 to 12.

FIG.1

FIG.2

FIG.3

FIG. 4

Sous-trame
de n pixels

Sous-trame
de n pixels

Sous-trame
de n pixels

$X_0$
$X_1$

$X_{N-1}$
$Y_0$
$Y_1$

$Y_{N-1}$
$Z_0$
$Z_1$

$Z_{N-1}$

TL6    CCD

X

Y

Z

1

SÉQUENCEUR
CORRECTEUR
DE DIAPHONIE

X'

Y'

Z'

FIG.5a

$X_0, X_1,...$
$...,X_{N-2},X_{N-1},...,X_{M-1}$

$Y_0, Y_1,...$
$...,Y_{N-2},Y_{N-1},...,Y_{M-1}$

$Z_0, Z_1,...$
$...,Z_{N-2},Z_{N-1},...,Z_{M-1}$

Référence 0

Séquenceur
d'entrée

$X_s$

$Y_s$

$Z_s$

Cor1

Cor2

Cor3

5

5

5

4

4

4

Est1

Est2

Est3

$X'_s$

$Y'_s$

$Z'_s$

2

2

2

$X'_0, X'_1,...,X'_{N-2}, X'_{N-1},...$

$Y'_0, Y'_1,...,Y'_{N-2}, Y'_{N-1},...$

$Z'_0, Z'_1,...,Z'_{N-2}, Z'_{N-1},...$

Séquenceur
de sortie

3

6

FIG.5b

15

FIG.5c

FIG.5e

FIG.5d

$X$ :   $X_0, X_1, X_2, \ldots, X_{N-2}, \boxed{X_{N-1}}, X_{M-m} \ldots, X_{M-1}, X_0, X_1, X_2, \ldots, X_{N-2}, X_{N-1}, X_{M-m'} \ldots, X_{M-1}, X_0, X_1, \ldots$

$Y$ :   $\boxed{Y_0}, \boxed{Y_1}, Y_2, \ldots, \bigcirc\!Y_{N-2}, \bigcirc\!Y_{N-1}, Y_{M-m} \ldots, Y_{M-1}, Y_0, Y_1, Y_2, \ldots, Y_{N-2}, Y_{N-1}, Y_{M-m'} \ldots, Y_{M-1}, Y_0, Y_1, \ldots$

$Z$ :   $\bigcirc\!Z_0, Z_1, Z_2, \ldots, Z_{N-2}, Z_{N-1}, Z_{M-m}, \ldots, Z_{M-1}, Z_0, Z_1, Z_2, \ldots, Z_{N-2}, Z_{N-1}, Z_{M-m}, \ldots, Z_{M-1}, Z_0, Z_1, \ldots$

$Y(M)$ :   $Y_0, Y_1, Y_2, \ldots, Y_{N-2}, Y_{N-1}, Y_{M-m} \ldots, Y_{M-1}, \boxed{Y_0}, \boxed{Y_1}, Y_2, \ldots, \bigcirc\!Y_{N-2}, \bigcirc\!Y_{N-1}, Y_{M-m} \ldots, Y_{M-1}, Y_0, Y_1, \ldots$

$Y_S$ :   $Y_0, Y_1, Y_2, \ldots, Y_{N-2}, Y_{N-1}, Z_0, \ldots, \boxed{X_{N-1}}, \boxed{Y_0}, \boxed{Y_1}, Y_2, \ldots, \bigcirc\!Y_{N-2}, \bigcirc\!Y_{N-1}, \bigcirc\!Z_0, \ldots, X_{M-1}, Y_0, Y_1, \ldots$

$X_P$ :   $X_0, \quad X_2, \ldots, X_{N-2}, \ldots \ldots X_{M-2}, \quad X_0, \quad X_2, \ldots, X_{N-2}, \ldots \ldots X_{M-2'}, \quad X_0, \ldots$

$X_i$ :   $X_{1'}, \quad X_3, \ldots, \boxed{X_{N-1}}, \ldots \ldots, X_{M-1'}, X_1, \quad X_3, \ldots, X_{N-1}, \ldots \ldots, X_{M-1'}, X_1, \ldots$

$Y_P$ :   $Y_0, \quad Y_2, \ldots, Y_{N-2}, \ldots \ldots Y_{M-2'}, \quad \boxed{Y_0}, \quad Y_2, \ldots, Y_{N-2}, \ldots \ldots, Y_{M-2'}, \quad Y_0, \ldots$

$Y_i$ :   $Y_1, \quad Y_3, \ldots, \bigcirc\!Y_{N-1}, \ldots \ldots, Y_{M-1'}, \boxed{Y_1}, \quad Y_3, \ldots, Y_{N-1}, \ldots \ldots, Y_{M-1'}, \quad Y_1, \ldots$

# FIG.6

EP 0 718 826 B1

SÉQUENCEUR D'ENTRÉE

S(M) : sortie S mémorisée ou retardée d'une trame.
↑ : sélection d'un échantillon à chaque trame.

FIG.7

SÉQUENCEUR DE SORTIE

S(M) : sortie S mémorisée ou retardée d'une trame.
↑ : sélection d'un échantillon à chaque trame.

FIG.8

5

Sp-1,Sp,Sp+1 → | correction diaphonie | → S'p-1,S'p,S'p+1

Cdp

$C_{gp}$

7g — filtre    filtre — 7d

$e_{gp}$    $e_{dp}$

| estimation diaphonie |

4

| − | — 8

| intégrateur | — 9

signal de suivi de piste

## FIG.9a

71

$e_{gp}$    $C_{gp}$

→ (k')  (+) →

70    $D^n$

72

## FIG.9b

FIG. 9c

n pixels {

n pixels {

n pixels {

CCD
(TL6)

$X_p$

$X_i$

$Y_p$

$Y_i$

$Z_p$

$Z_i$

SÉQUENCEUR
CORRECTEUR
DE DIAPHONIE

1

$X'_p$

$X'_i$

$Y'_p$

$Y'_i$

$Z'_p$

$Z'_i$

FIG.10a

$Y_p$

$Y_0$

$Y_1$

$Y_i$

50

D

$X_{N-1}$

ROM

52

53

$C_{gp}$   $C_{dp}$

FIG.10b